Europäisches Patentamt

European Patent Office

Office européen des brevets

(19)

(11) Veröffentlichungsnummer : **0 068 128**
**B1**

# (12) EUROPÄISCHE PATENTSCHRIFT

(45) Veröffentlichungstag der Patentschrift : **11.12.85**

(51) Int. Cl.⁴ : **F 16 L 11/16**

(21) Anmeldenummer : **82104199.3**

(22) ·Anmeldetag : **13.05.82**

(54) **Aus Bandmaterial gewickelter, durch Drahtwendel verstärkter flexibler Schlauch.**

(30) Priorität : **29.06.81 DE 3125499**

(43) Veröffentlichungstag der Anmeldung :
**05.01.83 Patentblatt 83/01**

(45) Bekanntmachung des Hinweises auf die Patenterteilung : **11.12.85 Patentblatt 85/50**

(84) Benannte Vertragsstaaten :
**AT BE CH FR GB LI NL SE**

(56) Entgegenhaltungen :
**DE-A- 2 418 990**
**DE-A- 3 000 351**

(73) Patentinhaber : **Alcan Ohler GmbH**
**D-5970 Plettenberg/Ohle (DE)**

(72) Erfinder : **Werner, Friedrich**
**Eschener Weg 77**
**D-5970 Plettenberg/Ohle (DE)**

(74) Vertreter : **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

**Beschreibung**

Die Erfindung betrifft einen aus Bandmaterial konstanter Breite gewickelten, biegsamen, axialflexiblen Niederdruckschlauch, dessen Bandwendel an ihren Kanten sich überlappen wobei in die Überlappung zwischen jeweils zwei Bandkanten eine Drahtwendel eingebettet ist, und die Längsachse des Drahtes sowie die Längsachse des Bandes die gleiche Neigung in bezug auf die Schlauchachse haben.

Schläuche dieser Gattung werden häufig zum Transport von gasförmigen Stoffen verwendet ; so dienen sie beispielsweise in der Klimatechnik als Luftführungsschläuche, oder sie werden zum Absaugen von Stäuben verwendet.

Derartige Schläuche bestehen im allgemeinen aus einem in Schraubenwendelform gewickelten Folienstreifen oder -band, nachfolgend als Band bezeichnet, und einem in Schraubenwendelform gewickelten Draht. Als Material für die Bänder kommen Gewebe, mit Kunststoff beschichtete Gewebe, Kunststoff-Folien, Metallfolien und Verbundfolien, d. h. Gewebe die mit einer Kunststoff- oder Metallfolie kaschiert sind, zur Anwendung. Die Bänder werden so gewickelt, daß sie sich an ihren Kanten überlappen, und an der Überlappung werden sie durch Schweißen, Kleben, Nähen oder gleichartige Verfahren verbunden.

Da das Bandmaterial im allgemeinen zu schwach ist, um dem Schlauch die erforderliche Festigkeit gegen Zug und Druck zu verleihen, kommt eine Drahtwendel als Verstärkung für die aus dem Bandmaterial bestehende Schlauchwandung zum Einsatz. Als Drahtmaterial kommen Drähte mit blanken oder Korrosionsgeschützten Oberflächen (verzinkte oder verkupferte Drähte), mit PVC (Polyvinylchlorid) ummantelte Drähte oder solche aus Aluminium oder Hart-PVC zur Anwendung.

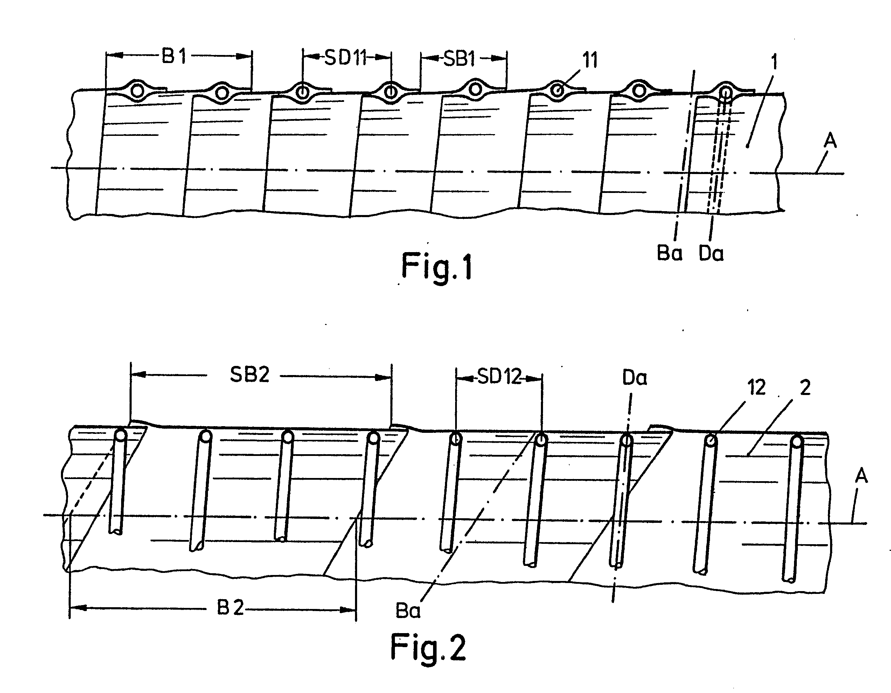

Man begegnet derartigen Folienschläuchen in zwei Ausführungsformen, und zur Erläuterung des Standes der Technik wird Bezug genommen auf die beigefügten Fig. 1 und 2, die teilweise abgebrochene Längsschnitte in lediglich schematischer Darstellung durch bekannte Folienschläuche zeigen, wobei die Schlauchachse mit A bezeichnet ist.

Bei der Ausführungsform nach Figur 1, die in etwa der Lösung gemäß DE-A-24 18 990 entspricht, kommt ein Band mit der Breite B1 zur Andwendung. Das Band 1 kann beispielsweise auf einem zylindrischen Dorn oder auf einer Vorrichtung mit radial verstellbaren, im entstehenden Schlauch angeordneten Führungsrollen mit gleicher Steigung SB 1 der einzelnen Bandwendel gewickelt werden. Die Bandwendel überlappen sich, und in die Überlappung wird zugleich mit dem Wickeln des Bandes der verstärkende Draht 11 eingefügt. Die Steigung SD 11 der Drahtwendel 11 ist die gleiche wie diejenige der Bandwendel 1, d. h. die Teilungen der Drahtlängsachsen Da und der Längsmittellinien Ba des Bandes (= Bandlängsachsen Ba) entlang der Achse A des Schlauchs sind gleich.

Der Vorteil dieser Ausführungsform liegt darin, daß die Schläuche aufgrund der gleichen Steigungen von Band und Draht auf einer kontinuierlich arbeitender Maschine gefertigt werden können. Der Vorgang kann automatisiert werden, wodurch die Fertigungskosten gering sind.

Der Nachteil dieser Ausführungsform liegt darin, daß für jede Drahtwendel ein recht große Überlappungsanteil in den aufeinanderfolgenden Bandwendeln erforderlich ist.

Da aber aus Gründen der Stabilität des Schlauchs die Steigung SD 11 der Drahtwendel nicht beliebig groß gewählt werden kann, ist ein hoher Verbrauch an Bandmaterial die Folge. Im Vergleich zu den Kosten für den Draht ist das Bandmaterial erheblich teurer, d. h. die Kosten für den Draht ist das Bandmaterial erheblich teurer, d. h. die Kosten für den Schlauch werden hauptsächlich durch die Kosten für das Bandmaterial bestimmt.

Bei der Ausführungsform nach Fig. 2 kommt ein Band 2 mit der Breite B2 zur Anwendung und wird ebenfalls mit gleicher Steigung SB 2 gewickelt. Die Bandwendel überlappen sich nur wenig und sind an der Überlappung fest verbunden. Die Breite B 2 des Bandes ist beträchtlich größer als die Bandbreite B 1 bei der Ausführungsform nach Fig. 1. Die aus dem Draht 12 gebildete Drahtwendel hat — eben aus Gründen der Festigkeit des Schlauchs — wieder die Steigung SD 12, die der Steigung SD von Fig. 1 gleich ist. Die Neigung der Drahtachse Da zur Schlauchachse A und die Neigung der Bandachse Ba zur Schlauchachse A kann gleich oder, wie in Fig. 2 gezeigt ist, unterschiedlich sein. In der Regel ist die Teilung der Bandwendel und der Drahtwendel entlang der Schlauchachse verschieden, diejenige der Drahtwendel ist geringer als die der Bandwendel.

Bei der Fertigung wird zuerst die Drahtwendel auf einem zylindrischen Dorn, der die Länge des herzustellenden Schlauchs hat, gewickelt, dann wird die Bandwendel darüber gewickelt ; beide Wendel stellen zwei eigene Lagen dar, die meistens durch Kleben miteinander verbunden werden.

Der Vorteil dieser Ausführungsform liegt darin, daß die Bandbreite B2 und damit die Bandsteigung SB 2 unabhängig von der Drahtsteigung SD 12 gewählt werden kann ; die Überlappung kann, da der versteifende Draht nicht mit erfaßt zu werden braucht, kleiner sein, und damit verringern sich die Kosten für das Band zusätzlich.

Der Nachteil dieser Ausführungsform liegt darin, daß Drahtwendel und Bandwendel in zwei getrennten Arbeitsgängen auf einem Dorn, der die Länge des zu fertigenden Schlauchs hat, gewickelt werden müssen. Dieser Arbeitsvorgang ist zeitaufwendig und nur schwierig zu automatisieren. Darüber hinaus kann der Schlauch nur in bestimmten Fixlängen und nicht endlos gefertigt werden. Aus der DE-A-30 00 351 ist noch ein gattungsfremder Schlauch bekanntgeworden, der als Hochdruckschlauch ausgebildet ist. Das bekannte Band weist zwei parallele Rillen auf, die zur Aufnahme zweier nebengeordneter Drahtwendel vorgesehen sind. Das Band ist bewußt formstabil gestaltet, um sowohl bei der Herstellung als auch beim Gebrauch des Schlauches die Exaktheit der schraubenförmigen Wendelbahn sicherzustellen. Im gewickelten Zustand überlappt sich die Bahn zu 100 %. Bedingt durch die vorstehenden Maßnahmen ist der bekannte Schlauch in axialer Richtung nicht flexibel. Die Dehn- und Stauchfähigkeit soll gerade ausgeschlossen werden.

Der Erfindung liegt die Aufgabe zugrunde, einen Niederdruckschlauch der eingangs genannten Art zu schaffen, der mit niedrigen Herstellung- und Materialkosten zu fertigen ist und bei ausreichender Festigkeit ein Optimum an Flexibilität bietet.

Diese Aufgabe wird dadurch gelöst, daß zum Erreichen eines möglichst geringen Überlappungsanteiles der Bandwendel mindestens eine weitere, der eingebetteten mit gleicher Steigung nebengeordnete Drahtwendel vorhanden ist, die an der Innenseite des Bandes außerhalb des Überlappungsbereiches befestigt ist.

Da diese zweite Drahtwendel die gleiche Steigung aufweist wie die eingebettete, kann der Schlauch relativ preisgünstig in einem Arbeitsgang durch kontinuierliches, gleichzeitiges Wickeln der Band- und Drahtwendel hergestellt werden. Die zusätzliche Drahtwendel bietet zudem die Möglichkeit, mit relativ großer Steigung der Wendeln zu arbeiten, d. h. den Überlappungsanteil der Bandwendel möglichst gering zu halten. Der Schlauch wird dennoch in dem für niedrige Drücke notwendigen Maße stabil. Weiterhin ist der Schlauch so flexibel, daß er für den Versand eng zusammengepackt und bei der Verwendung in engen Radien verlegt werden kann.

Aus Festigkeitsgründen waren große Steigungswinkel bisher nur bei Schlauchdurchmessern unter 100 mm möglich. Durch die Erfindung wird jedoch erreicht, große Steigungswinkel, z. B. 20°, auch bei Schläuchen mit großem Durchmesser anwenden zu können. Schläuche mit sehr großem Durchmesser (oberhalb 400 mm) erhalten kleinere Steigungswinkel, wobei die Grenze bei 2° liegt.

Bei großen Bandbreiten ist es von Vorteil, nicht nur zwei Drahtwendel sondern mehrere vorzusehen. Die Anzahl der verwendeten Drahtwendel wird naturgemäß auch von der vorgesehenen Verwendung des Schlauches beeinflußt. Unterliegt er hohen mechanischen Beanspruchungen, so wird man eine größere Anzahl von Drahtwendeln wählen.

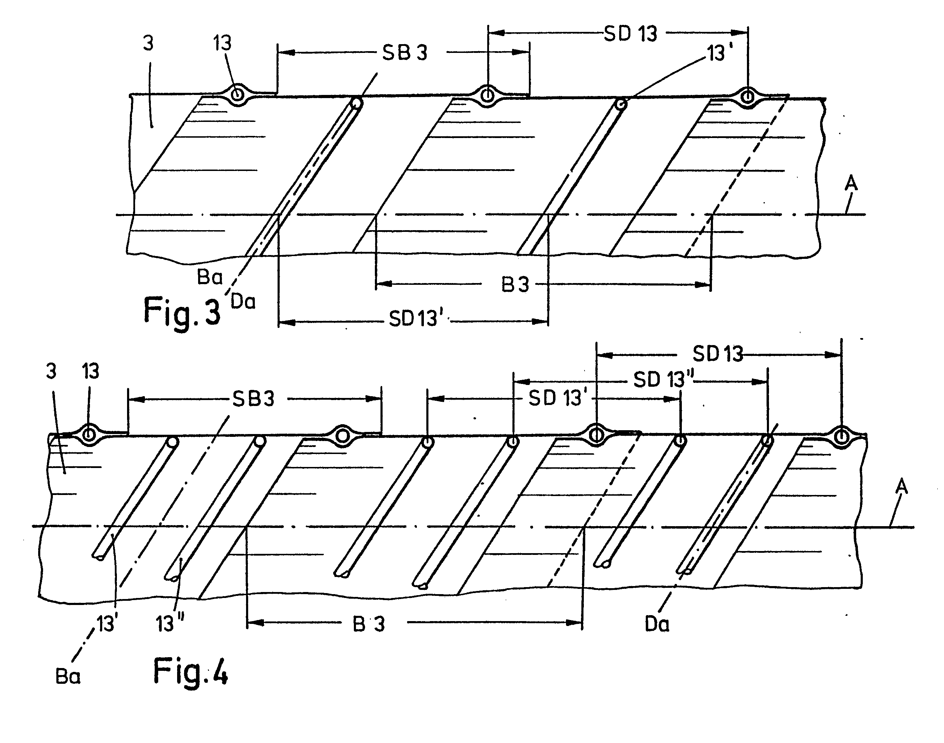

Der Erläuterung des Erfindungsgegenstandes dienen die Fig. 3 und 4, die teilweise abgebrochene Längsschnitte in schematischer Darstellung durch einen Schlauch gemäß der Erfindung zeigen.

Der Schlauch nach Fig. 3 besteht aus dem Band 3 mit der Breite B3, das in Schraubenwendelform mit der Steigung SB 3 gewickelt wird, wobei die Bandlängsachse Ba sowie die Drahtlängsachse Da zusammenfallen und im Vergleich zu Fig. 1 stärker gegenüber der Schlauchachse A geneigt sind. In die von aufeinanderfolgenden Bandwendeln gebildete Überlappung ist eine Drahtwendel 13 eingeschlossen.

Die Steigung SD 13 der Drahtwendel 13 sowie die Steigung SB 3 der Bandwendel 3 sind gleich und werden so gewählt, daß für das Band das Kostenminimum erreicht wird, die Schlauchstabilität bleibt hierbei außer Betracht. Um trotz großer Steigungen oder Teilungen der Drahtwendel 13 eine ausreichende Stabilität für den Schlauch gewährleisten zu können, wird eine weitere Drahtwendel 13' eingearbeitet, die zwischen den Drahtwendeln 13 und mit gleicher Steigung wie diese angeordnet wird, d. h. SD 13 ist gleich SD 13'.

Die Fig. 4 zeigt eine gegenüber Fig. 3 abgewandelte Ausführungsform, wobei insgesamt drei Drahtwendel 13, 13' und 13" eingearbeitet sind. Die Teilungen der Drahtwendel entlang der Achse sind gleich, damit sind die Abstände zwischen den Drahtwendeln 13, 13' und 13" gleich und die Neigung der Achse Ba der Bandwendel 3 sowie die Neigung der Achsen Da der Drahtwendel 13, 13' und 13" in bezug zur Achse A sind ebenfalls gleich. Gemäß der bevorzugten Ausführungsform sind hier — wie auch bei der Ausführung nach Fig. 3 — die Drahtwendel symmetrisch zur Bandachse Ba angeordnet.

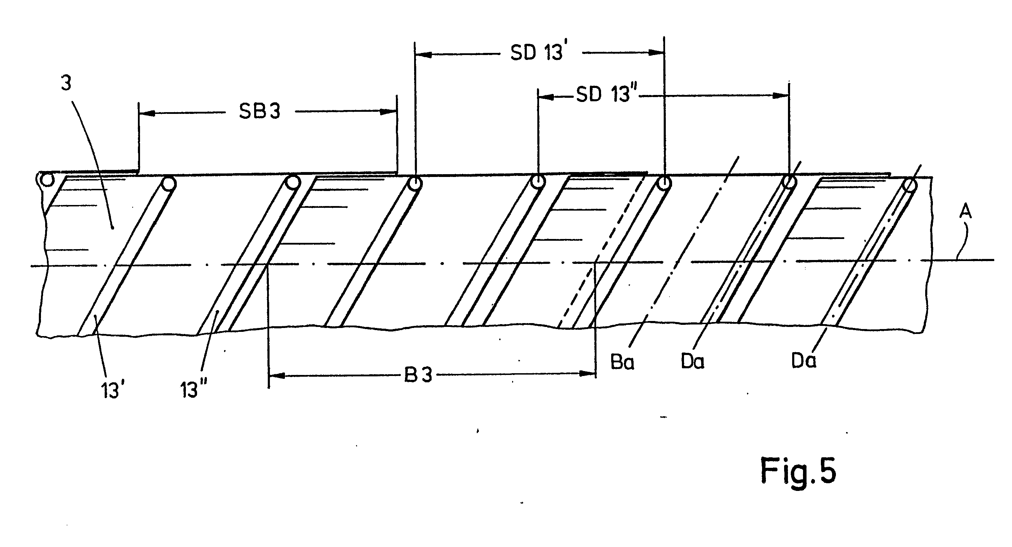

Bei der Ausführungsform nach Fig. 5 kommen lediglich an der Bandinnenwand anliegende Drahtwendel zur Anwendung, d. h., daß in die Überlappungsbereiche der Bandkanten keine Drahtwendel eingebettet ist. Die beiden Drahtwendel 13', 13" liegen mit ihren Achsen Da parallel zur Bandachse Ba.

Die Drahtwendel 13', 13" werden mit der Innenflächender Bandwendel festhaftend verbunden. Dies kann z. B. bei Verwendung von mit PVC beschichtetem Gewebeband durch Verwendung von mit PVC ummanteltem Draht geschehen, wobei Wand und Draht durch Kleben oder Schweißen miteinander verbunden werden. Drähte ohne Kunststoffummantelung können unmittelbar, z. B. durch Schmelzkleber, auf der Bandfläche befestigt werden.

## Patentansprüche

1. Aus Bandmaterial konstanter Breite gewickelter, biegsamer, axialflexibler Niederdruckschlauch, dessen Bandwendel (3) an ihren Kanten sich überlappen, wobei in die Überlappung zwischen jeweils zwei Bandkanten eine Drahtwendel (13) eingebettet ist, und die Längsachse (Da) des Drahtes (13) sowie die Längsachse (Ba) des Bandes (3) die gleiche Neigung in bezug auf die Schlauchachse (A) haben, dadurch gekennzeichnet, daß zum Erreichen eines möglichst geringen Überlappungsanteiles der Bandwendel (3) mindestens eine weitere, der eingebetteten mit gleicher Steigung nebengeordnete Drahtwendel (13', 13") vorhanden ist, die an der Innenseite des Bandes (3) außerhalb des Überlappungsbereiches befestigt ist.

2. Schlauch nach Anspruch 1, dadurch gekennzeichnet, daß der Steigungswinkel der Drahtwendel (13, 13', 13") 2 bis 20° beträgt.

## Claims

1. Pliable, axially flexible low-pressure hose wound from strip material of constant width, the strip spirals (3) of which hose overlap at their edges, a wire spiral (13) being embedded in the overlap between each two strip edges and the longitudinal axis (Da) of the wire (13) and the longitudinal axis (Ba) of the strip (3) having the same inclination relative to the hose axis (A), characterised in that, to achieve an as small as possible proportion of overlap of the strip coils (3), at least one further wire spiral (13', 13") is provided alongside the embedded spiral at the same inclination and is fixed to the inside of the strip (3) beyond the overlap region.

2. Hose according to Claim 1, characterised in that the angle of inclination of the wire spirals (13, 13', 13") is 2 to 20°.

## Revendications

1. Tuyau basse pression en ruban enroulé de largeur constante, souple, flexible sur son axe, dont les spires de ruban (3) se chevauchent sur leurs bords, alors que dans le chevauchement entre chaque groupe de deux bords de ruban, une spire de fil d'acier (13) est inserrée, et que l'axe longitudinal (Da) du fil d'acier (13) ainsi que l'axe longitudinal (Ba) du ruban (3) ont la même inclinaison par rapport à l'axe du tuyau (A), caractérisé en ce que, pour obtenir une partie chevauchée aussi faible que possible des spires de ruban (3), au moins une autre spire de fil d'acier (13', 13") est disposée selon la même inclinaison et fixée sur la face interne du ruban (3) au-dehors de la zone de chevauchement.

2. Tuyau selon la revendication 1, caractérisé en ce que l'angle d'inclinaison des spires de fil d'acier (13, 13', 13") est de 2 à 20°.

0 068 128

Fig.1

Fig.2

Fig. 3

Fig. 4

Fig.5